# EUROPEAN PATENT SPECIFICATION

(11) **EP 1 910 731 B1**
(45) Date of publication and mention of the grant of the patent: **15.09.2010**
(21) Application number: 05777715.3
(22) Date of filing: 19.07.2005
(51) Int. Cl.: F16L 47/02

(54) **COUPLING OF CONDUITS WITH MELTED AND SOLIDIFIED PLASTIC MATERIAL**
VERBINDUNG VON LEITUNGEN MIT GESCHMOLZENEM UND ERSTARRTEM KUNSTSTOFFMATERIAL
COUPLAGE DE CONDUITES AVEC UNE MATIERE PLASTIQUE FONDUE ET SOLIDIFIEE

(43) Date of publication of application: 16.04.2008
(73) Proprietor: Agilent Technologies, Inc., Santa Clara CA 95051 (US)
(72) Inventor: BEIGEL, Bertram, 76133 Karlsruhe (DE); MUELLER, Jochen, 76199 Karlsruhe (DE)
(74) Representative: Barth, Daniel Mathias
(86) International application number: PCT/EP2005/053486
(87) International publication number: WO 2007/009492

(56) References cited:
- GB-A- 2 009 873
- US-A- 2 962 305
- US-A- 4 921 648
- US-A- 5 366 253

## Description

### BACKGROUND ART

The present invention relates to coupling of conduits.

Couplings are used for allowing conduits adapted for conducting a medium to communicate. Known are, for example, light guides or fluid conduits for conducting light or a fluid, for example a liquid. A capillary, for example, can serve as a fluid conduit and as a light guide. Flow cells, for example, for analyzing a fluid can comprise a fluid conduit and a light guide. Flow cells can comprise different conduits communicating via one or more connections.

US 6,526,188 B2 and the US 2001/0010747 show a modular flow cell having a high optical throughput, a long optical path length and a small cross-section. The modular flow cell configuration includes remote ports or connections for liquid and light input, and liquid and light output.

US 5,444,807 shows a flow-through cell for use in the measurement of chemical properties of small volumes of fluid containing dissolved analytes.

US 5,608,517 discloses a coated flow cell and a method for making the coated flow cell. The flow cell comprises a flow passage, wherein light directed into the flow cell is internally reflected down the flow passage.
Other known fluid plastic connections are disclosed in US 5 366 253 A and US 2 962 305 A.

### DISCLOSURE

It is an object of the invention to provide an improved coupling of at least two conduits. The object is solved by the independent claims. Further embodiments are shown by the dependent claims.

According to embodiments of the present invention, a method of coupling at least two conduits for bringing them in communication is suggested. Each of the conduits is adapted for conducting a medium, for example, light and/or fluid and comprises an outlet and an outer surface adjacent to the outlet. The outer surfaces of the conduits are inserted at least partly into an aperture of a coupling element. Besides this, a solid plastic material is inserted into the aperture. Thereafter, the plastic material is heated at least partly for plastifying and/or melting the plastic material at least partly. Finally, the plastic material is solidified for example for sealing and fixing the conduits within the aperture of the coupling element. Further embodiments may comprise one or more of the following. Advantageously, the plastic material can be solidified very quickly by cooling. This enables a very short production time per piece. Besides this, the resulting coupling element is relative small and well usable for coupling fragile conduits.

Advantageously, the solid plastic material can be prefabricated, for example, by injection molding, extrusion molding, a turning process, or alike. The plastic material can be melted by heating at least partly the arrangement of the at least two conduits and the coupling element. Advantageously, a plurality of such couplings can be premounted and then finished by heating them up concurrently, for example, in a curing oven. Besides this, the plastic material can be heated up by inducing a current into the coupling element, wherein the coupling element can comprise at least partly a conductive material. Advantageously, the couplings can be produced in a mass manufacturing process with comparable short manufacturing time per produced unit. As assumption, the common operational parameters, for example, the currency and the time of the heat treatment can be easily determined by a test series. The plastic material can be heated above the softening temperature and/or above the melting temperature so that the plastic material can realize a chemical bond with the surface of a suited material of the coupling element and/or the conduits. For this purpose, the conduits can but do not have to comprise a metal coat. The component parts can be coated with a suited material. Such a chemical bond can be realized, for example, between polyetheretherketone (PEEK) and metal, for example, chromium. The plastic material can be heated to a temperature significantly above the melting point. Consequently, the viscosity of the plastic material can be reduced to a minimum.

The plastic material can be disposed exactly on and along an inner surface of the aperture and outer surfaces of the at least two conduits, wherein the inner surface is facing the outer surfaces. Advantageously, tolerances can be adjusted. This makes a cheaper production of the component parts of the coupling possible. Advantageously, preformed parts of the plastic material can be assembled between the surfaces. The preformed parts can be adapted for fitting in a gap between the surfaces. Advantageously, the preformed parts can comprise a low exactness. Due to the thermal expansion and reduced viscosity during the step of heating for plastifying and/or melting, the plastic material can be disposed especially exactly on and along the surfaces. The material can creep and/or flow into small gaps. Besides this, the preassembled construction can be unstressed at least partly by the step of plastifying and/or melting the plastic material. Any stress occurring with other methods, for example, soldering or brazing can be avoided. Furthermore, the sealing forces can be distributed homogenous to the surfaces of the sensitive parts. Besides this, a self-centering effect of the outer surfaces of the conduits within the aperture is possible.

In embodiments, the plastic material can also be an integral part of the conduits, for example at least a partly coating on the conduits.

Besides this, the plastic material can be melted by running a hot fluid through the conduits. By this, the plastic material can be melted partly at the interfacial area between the outer surfaces of the conduits and the inner surface of the aperture.

Advantageously, the plastic material expands while heating and shrinks while cooling down. The plastic material can be a high performance plastic material, such as polyetheretherketone (PEEK), fluoropolymers for example perfluoroamines (PFA) or fluorinated ethylen-propylen copolymer (FEP), duroplastic material for example Polyimide, compounds for example metal or ceramic filled PEEK. The increased volume of the plastic material leads to an increased pressure within the interfacial area or better the gap between the outer surfaces of the conduits and the inner surface of the aperture. The increased pressure is favorable for enabling the chemical bond. Dependent on the detention time of heating for plastifying and/or melting the plastic material, it can penetrate the surface structure. By this, the plastic material can be bounded between the outer surfaces of the conduits and the inner surface of the aperture. A rough or porous surface improves this effect. During solidifying, the plastic material will be tensed in the surface structure of the inner surface of the aperture. The tensing effect can be improved in a design by which the surface roughness of the material of the inner surface of the aperture is greater than the absolute measurement of the shrinkage of the plastic material. Besides this, the plastic material shrinks on the outer surfaces of the conduits. These effects enable a leak-proof connection of the conduits for pressures, for example, up to 300 bar or higher, via the aperture. Besides this, PEEK is very durable against strong solvents, for example, used for liquid chromatography or high performance liquid chromatography (HPLC) processes and does not cold flowing significantly.

Embodiments may comprise one or more of the following. The aperture comprises at least two openings, wherein one of the outer surfaces is inserted into a first opening of the aperture and one of the outer surfaces is inserted into a second opening of the aperture. By this, the outlets adjacent to the outer surfaces are both inserted into the aperture and facing each other. The inner surface of the aperture can be realized as a cylindrically inner surface of a bore, for example, a stepped bore. Advantageously, the diameter of the bore can be lower in the middle of the bore. The step inside the bore of the aperture can realize a limit stop for the conduits and the plastic material inserted into the aperture. After plastifying or rather melting and cooling down the plastic material, the outlets of the conduits communicate, for example, via a span of the inner surface of the bore of the aperture.
For connecting a light guide with an optical outlet and a fluid conduit with a fluid outlet, the optical outlet of the light guide can be inserted into the fluid outlet of the fluid conduit. The inner dimension of the fluid conduit has to be smaller than the outer dimension of the light guide. Both conduits can be inserted, fixed, and sealed within the aperture. The inner surface of the aperture is adapted to the different dimensions of the outer surfaces of the light guide and the fluid conduit.
According to further embodiments of the present invention, a coupling for bringing at least two conduits in communication is suggested. The coupling element comprises an aperture adapted for receiving a plastic material and at least partly outer surfaces of the at least two conduits. Advantageously, for sealing and fixing the conduits to an inner surface of the aperture of the coupling element, the plastic material was at least partly melted and thereafter solidified. The outer surfaces are circumferential surfaces surrounded with the plastic material. The material is disposed on and along the outer surfaces and the inner surface of the coupling element, wherein the inner surface faces the outer surfaces.
The at least one inner surface can comprise an undercut surrounded by the plastic material. Advantageously, the plastic material can additionally shrink on a circumferential surface of the undercut being part of the inner surface of the aperture. By this, the sealing can be improved. The shrinkage of the plastic material can be used additionally for sealing the inner surface of the aperture against the plastic material and consequently against the conduit surrounded also by the plastic material and inserted into the inner surface.
Advantageously, for coupling more than two conduits, the aperture can comprise a plurality of branches comprising the at least one inner surface. The branches are fluidically in communication with each other. Consequently, the plurality of conduits communicates via the branches of the aperture. Each of the conduits comprises an outlet inserted into one branch of the aperture. Possibly, one of the conduits comprises an optical outlet and another one a fluid outlet, for example, a capillary and a light guide, wherein the outlets are inserted into the aperture. For this purpose, standardized components can be used, for example, quartz capillaries, fibers, and/or photonic crystal fibers comprising entrapped air. Additionally, the optical outlet is inserted into the inner tube of the capillary for irradiating the fluid within the capillary. Advantageously, this can be used for realizing a flow cell.
According to further embodiments of the present invention, such a flow cell comprising at least one of said couplings is suggested. The light path of the flow cell can be easily realized by the light guide inserted into the capillary via the coupling. Besides this, the coupling can bring a supplying conduit in communication with the capillary. The flow cell can comprise two couplings each coupled to the light path and to the supplying conduit. By this, the flow cell can be supplied with a fluid, for example liquid, sample and drained via an inlet, a first coupling, the capillary, a second coupling, and an outlet of the supplying conduit. The light path of the flow cell leads through the sample via a light inlet of the light path, a first light guide, via the first coupling, the capillary, the second coupling, and a second light guide. For protecting the conduits, the flow cell can comprise a housing. Advantageously, the housing can comprise a supporting plate adapted for receiving the components of the flow cell and an according cover plate. The supporting plate and the cover plate surround and fix the couplings and the conduits of the flow cell. The design of the housing can compensate any thermal expansion of the different components of the flow cell and therefore magnify the operating temperature range.
According to further embodiments of the present invention, a fluid separation system with a fluid delivery system, a separation device, and a flow cell is suggested.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 shows a three-dimensional top front side view of a flow cell with a light conduit, a fluid conduit, and a housing,

Fig. 2 shows the flow cell in the view of Fig. 1, but in an exploded view,

Fig. 3 shows a three-dimensional top view of the conduits of the flow cell of Fig. 1 within a supporting plate of the housing without a cover part of the housing,

Fig. 4 shows a detailed view of a coupling element of the flow cell as shown in Fig. 3,

Fig. 5 shows a three-dimensional inner view of a cover of the housing of the flow cell,

Fig. 6 shows a three-dimensional view of the conduits of the flow cell as shown in the Fig. 1 to 4,

Fig. 7 shows a partly longitudinal view of the coupling element of Fig. 4 comprising a plastic material for fixing and sealing conduits within the coupling element, and

Fig. 8 shows a partly longitudinal view of a coupling element with an undercut surrounded by the plastic material and a cover element for encapsulating the plastic material.

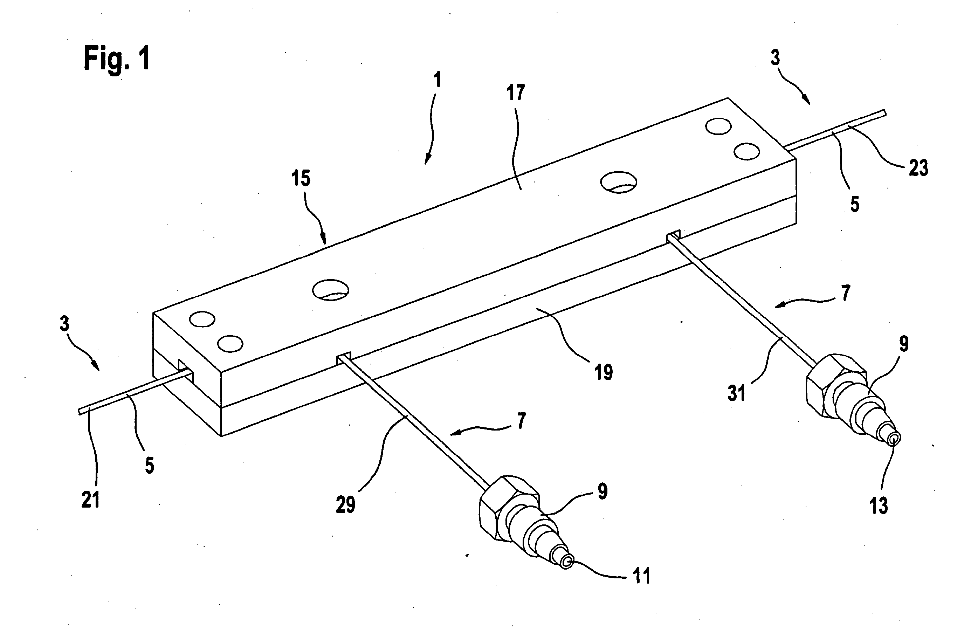

Fig. 1 shows a three-dimensional top front side view of a flow cell 1 with a light conduit 3 comprising a light guide 5 and a fluid conduit 7. The fluid conduit 7 of the flow cell 1 is coupled with two connecting pieces 9 realizing an inlet 11 and an outlet 13 for supplying and draining the flow cell 1 with a fluid, for example, with a liquid comprising a sample to be analyzed within the flow cell 1. The light conduit 3 is adapted for irradiating the sample flowing within the fluid conduit 7. Besides this, the light conduit 3 is adapted for guiding the light through the liquid within the fluid conduit 7 and out of the flow cell 1. Said light can be guided to a not shown light detector for detecting components within the sample.

The flow cell 1 comprises a housing 15 with a top cover 17 and a supporting plate 19. The housing 15 is adapted for receiving, positioning, and fixing the components within the flow cell 1 and facilitates the mounting. Besides this, the housing 15 surrounds the sensitive parts of the flow cell 1, consequently can protect them. Furthermore, before closing the top cover 17, the mounting process of the flow cell 1 can be visually checked.

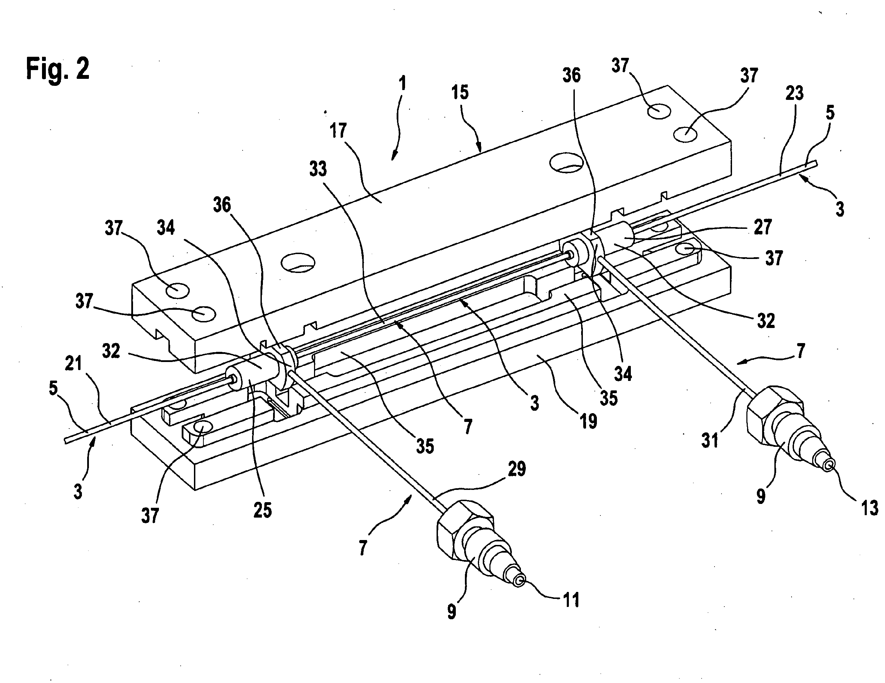

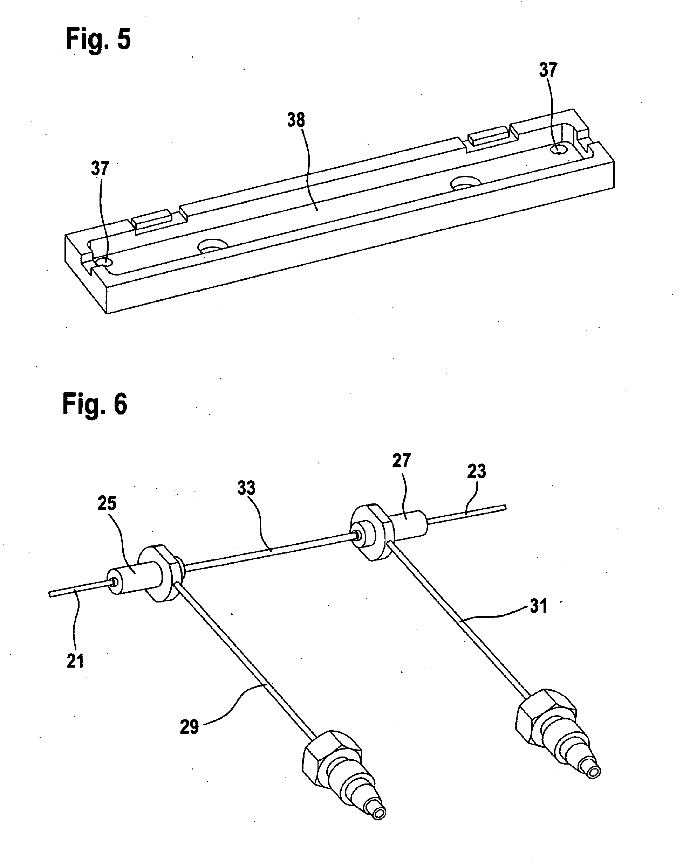

Fig 2 shows the flow cell 1 as shown in Fig 1, but in a three-dimensional exploded view. Visible is the complete light conduit 3, and the complete fluid conduit 7. A three-dimensional view of the conduits 3 and 7 without the housing 15 is shown in Fig. 6.

Referring to the Fig. 2 and 6, the conduits 3 and 7 of the flow cell 1 are described more in detail. The light conduit 3 comprises a first fiber 21 and a second fiber 23 comprising a not shown light inlet and a not shown light outlet for the flow cell 1. The fibers 21 and 23 realize the light guide 5 of the light conduit 3. The first fiber 21 is coupled to a first coupling element 25 and the second fiber 23 is coupled to a second coupling element 27. Besides this, the first coupling element 25 is coupled to an inlet capillary 29 and the second coupling element 27 is coupled to an outlet capillary 31. Furthermore, both coupling elements 25 and 27 are coupled to an analysis capillary 33 being part of the light conduit 3 and the fluid conduit 7. The fluid conducted within the analyses capillary 33 can be irradiated by the first fiber 21 being consequently in communication with the analysis capillary 33 via the first coupling element 25. The analysis capillary 33 is fluidically in communication with the inlet 11 via the connecting piece 9, the inlet capillary 29 and the first coupling element 25. The other end of the analysis capillary 33 is fluidically in communication with the outlet 13 via the second coupling element 27, the outlet capillary 31 and the connecting piece 9.

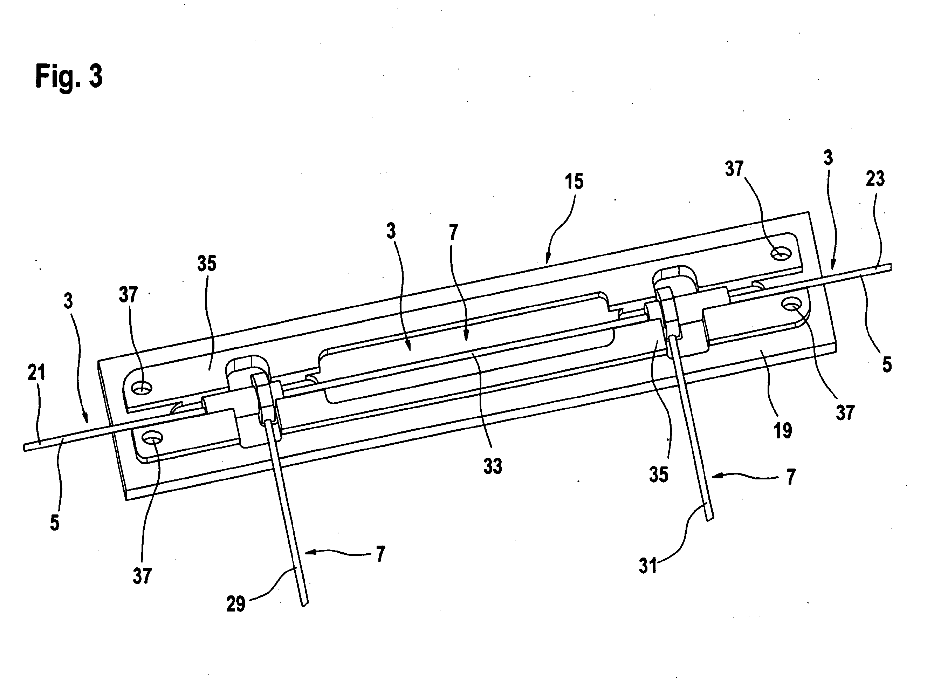

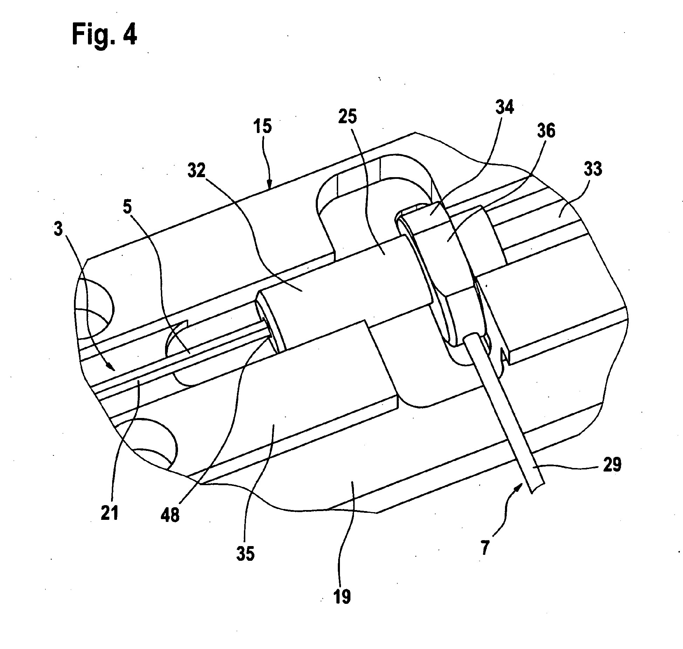

Fig. 3 shows a three-dimensional top view of the flow cell of Fig. 1 within the supporting plate 19 of the housing 15. The top cover 17 of the housing 15 is not shown in Fig. 3. Fig. 4 shows a detailed view of the coupling element 27 of the flow cell 1 as shown in Fig. 3. Referring to the Fig. 2, 3, and 4, the functional elements of the supporting plate 19 are described in detail. The supporting plate 19 of the housing 15 comprises receiving elements 35 adapted for receiving the different components of the flow cell 1, for example, the different conduits 3 and 7 including the coupling elements 25 and 27. The shape of the receiving elements 35 is adapted for receiving the components of the flow cell 1 in a form and/or force fitting manner. In other words, the shape of the receiving elements 35 is adapted to the outer shapes of the components covered by the housing 15.

The coupling element 25 (as shown in Fig. 4 in detail) comprises a stepped cylindrically body 32 adapted for supporting and/or receiving the analysis capillary 33 and the fiber 21. The body 32 comprises a circumferential step 34 with truncations 36. The truncations 36 can be opposed to each other and adapted for fixing the coupling element between the top cover 17 and the supporting plate 19 of the housing 15. The coupling element 27 can be constrained between the top cover 17 and the supporting plate 19 of the housing 15 via the truncations 36 of the cylindrically step 34. The step 34 is adapted for supporting the inlet capillary 29

As shown in Fig. 1 and 2, the housing 15 comprises the top cover 17. The top cover 17 is adapted to the outer shapes of the receiving elements 35 and the principally shape of the supporting plate 19. The receiving elements 35 match into an according recess 38 of the top cover 17. The top cover 17 can be fixed with the supporting plate 19 in a form and/or form fitting manner. Besides this, the top cover 17 and the supporting plate 19 can additionally fixed with each other via bores 37 adapted for receiving according fixing elements, such as screws, rivets, or alike.

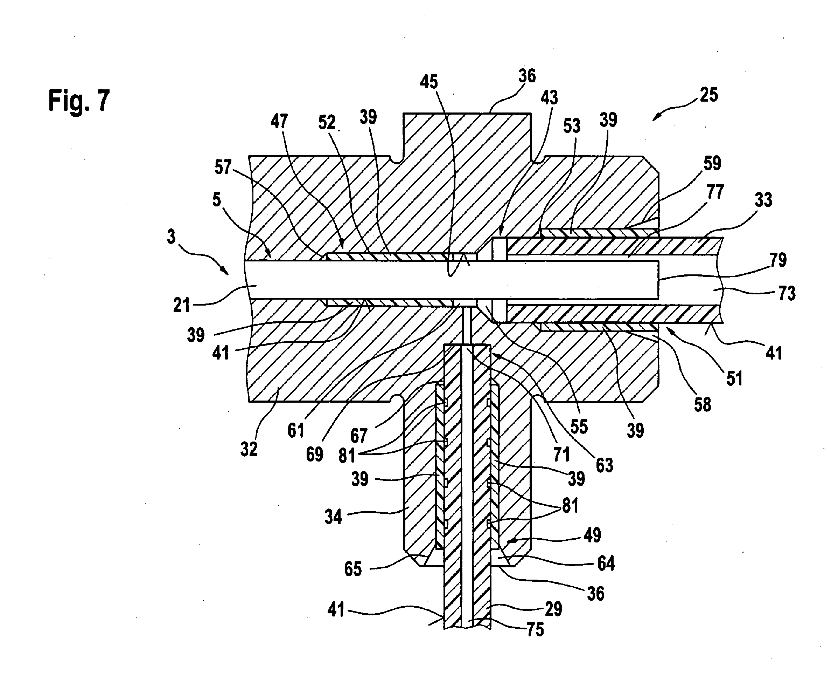

Fig. 7 shows a partly longitudinal view of the coupling element 25 of the flow cell 1. The coupling element 25 comprises a plastic material 39 adapted for fixing and sealing the conduit 3 and 7 of the flow cell 1 within the coupling element 25.

The fiber 21 of the light guide 5 of the light conduit 3 comprises an outer surface 41. The outer surface 41 is at least partly circumferential surrounded by the plastic material 39. The coupling element 25 comprises an aperture 43 comprising an inner surface 45. The aperture 43 of the coupling element 25 comprises a first branch 47 a second branch 49 and a third branch 51. The first branch 47 of the aperture 43 is adapted to the shape of the outer surface 41 of the fiber 21 and comprises a first opening 48 (not shown in Fig. 7). Consequently, the fiber 21 can be inserted into the first branch 47 of the aperture 43 of the coupling element 25. Besides this, the plastic material 39 can be inserted also into the first branch 47.

In the embodiment as shown in Fig. 7, the fiber 21 can be inserted through the first branch 47 into the aperture 43 and the plastic material 39 can be inserted through the third branch 51 or more precisely through a third opening 58 of the third branch 51. The inner surface 45 of the aperture 43 of the third branch 51 has a greater size as the diameter of the inner surface 45 of the first branch 47. The first branch 47 and the third branch 51 are coupled with each other and can be realized as a stepped through bore 52 with three steps 53 to 57. The first step 53 of the inner surface 45 of the third branch 51 reduces the inner diameter of the bore 52 down to the dimension of the outer diameter of the analysis capillary 33.

In the span with the greatest diameter before the first step 53, the aperture 43 of the coupling element 25 is adapted for receiving the analysis capillary 33 surrounded by the plastic material 39. The first step 53 can realize a limit stop for the plastic material 39 inserted into the aperture 33. At the second step 55 of the stepped bore 52 of the aperture 43, the diameter is reduced to the dimension of the outer diameter of the fiber 21 surrounded also by the plastic material 39. The third step 57 can realize a limit stop for the plastic material 39 surrounding the fiber 21. Consequently, the components of the coupling element 25 can be inserted in the following order into the stepped bore of the aperture 43: In a first step, the fiber 21 and the plastic material 39 surrounding the fiber 21 has to be inserted into the stepped bore 52 of the aperture 43. For avoiding any dead volume, the step 55 can comprise a flank adapted to the shape of the end of the analysis capillary 33. Consequently, the end of the analysis capillary 33 can be installed flush with the flank of the step 55 and bear against the flank of the step 55. The flank of the step 55 can be perpendicular to the longitudinal direction of the inner surface 45 of the aperture 43.

For example, firstly, the plastic material 39 can be inserted - in direction of Fig. 7 -from the right hand side into the third branch of the aperture 43 until it stops at the limit stop realized by the third step 57. In a next step, for example, the fiber 21 can be inserted - in direction of Fig. 7 - from the left hand side into the first branch 47 of the aperture 43 of the coupling element 45.

In a next step, the plastic material 39 surrounding the analysis capillary 33 can be inserted into the stepped bore 52 of the aperture 43 until the plastic material 39 is limited by limit stop realized by the first step 53 of the aperture 43 of the coupling element 25. Finally, the analysis capillary 33 can be inserted into the third branch 51 until it stops at the second step 55 of the stepped bore 52.

For simplifying the steps of inserting the components into the aperture 43, the stepped bore 52 or the third opening 58 can comprise a chamfer 59. The span of the stepped bore 52 of the aperture 43 between the third step 57 the second step 55 is not filled completely with the plastic material 39. Consequently, a gap 61 remains between the outer surface of the fiber 21 and the inner surface 45 of the aperture 43. At the span of the gap 61, a stepped supplying bore 63 leads into the through bore 52 of the aperture 43. The stepped supplying bore 63 or a second opening 64 of the second branch 49 of the aperture 43 can also comprise a chamfer 65. Besides this, the stepped supplying bore 63 comprises a first step 67 and a second step 69.

The inlet capillary 29 is also partly surrounded by the plastic material 39 and can be inserted into the stepped supplying bore 63 as follows. In a first step, the plastic material 39 can be inserted into stepped supplying bore 63 of the aperture 43 until the plastic material 39 is limited by a limit stop realized by the first step 67 of the stepped supplying bore 63. In a second step, the inlet capillary 29 can be inserted into the stepped supplying bore 63 until it is limited at a limit stop realized by the second step 69. In a second step, the inlet capillary 29 can be inserted into the stepped bore 63 until it is limited by a limit stop realized by the second step 69. Possibly, the capillary 29 can be inserted concurrently together with the plastic material 39. The span of the stepped supplying bore 63 - in direction for Fig. 7 - above the second step 69 is coupled fluidically to an outlet 71 of the inlet capillary 29 and to the gap 61 within the stepped through bore 52. The outlet 71 is adjacent to an outer surface 41 of the inlet capillary 29.

For supplying an inner tube 73 of the analysis capillary 33 with a liquid, an inner tube 75 of the inlet capillary 29 is fluidically in communication with the inner tube 73 of the analysis capillary 33. A fluid or a liquid can be conducted from the inner tube 75 of the supplying capillary 29 to the inner tube 73 of the analysis capillary 33 via the inner surface 45 of the aperture 43 of the coupling element 25, in particular via the stepped supplying bore 63, the gap 61 within the through bore 52 between the fiber 21 and the inner surface 45, and a gap 77 between the fiber 21 and the inner tube 73 of the analysis capillary 33. The fiber 21 is inserted into the inner tube 33 of the analysis capillary 33. The outer diameter of the fiber 21 and the inner diameter of the inner tube 73 of the analysis capillary 33 are dimensioned so that the gap 77 is large enough for conducting a fluid into the analysis capillary 33. Besides this, light can be irradiated into a fluid within the inner tube 73 of the analysis capillary 33 via the fiber 21 comprising an optical outlet 79 adjacent to the outer surface of the fiber 21.

The analysis capillary 33 is in communication with the fiber 21 via the medium light. Besides this, the inner tube 73 of the analysis capillary 33 is fluidically in communication with the inlet capillary 29. The coupling element 25 brings the light conduit 3 and the light conduit 7 in communication with each other.

For sealing and fixing the fiber 21, the inlet capillary 29, and the analysis capillary 33 within the aperture 43 of the coupling element 25 or rather to the inner surface 45 of the aperture 43, the plastic material 39 can be melted and solidified. By this, the plastic material 39 can realize a chemical bond with and/or can be tensed to the surface structure of the outer and inner surfaces of the components of the coupling element 25. The shrinkage of the plastic material in longitudinal direction supports this bounding or keying. To plastify and/or melt the plastic material 39, the complete coupling element 25 can be heated up to a temperature higher than the softening and/or melting temperature of the plastic material 39. Another method of plastifying and/or melting the plastic material 39 can be realized by inducing a current in the coupling element 25. For this purpose, the coupling element 25 can comprise a conductive material, for example, consists or of metal and/or can be coated with a conductive layer. For improving the compound of the plastic material and the surfaces, the surfaces can be roughened. In other embodiments, the surface can comprise a structure, for example, circumferential recesses 81. As shown in Fig. 7, the inlet capillary 29 comprises exemplarily four recesses 81. Advantageously, the thickness of the plastic material 39 can be dimensioned so that capillary forces between the surfaces keep the melted plastic material 39 within the aperture 43 of the coupling element and so that the total shrinkage is smaller than the surface roughness of the inner surface 45 of the aperture 43.

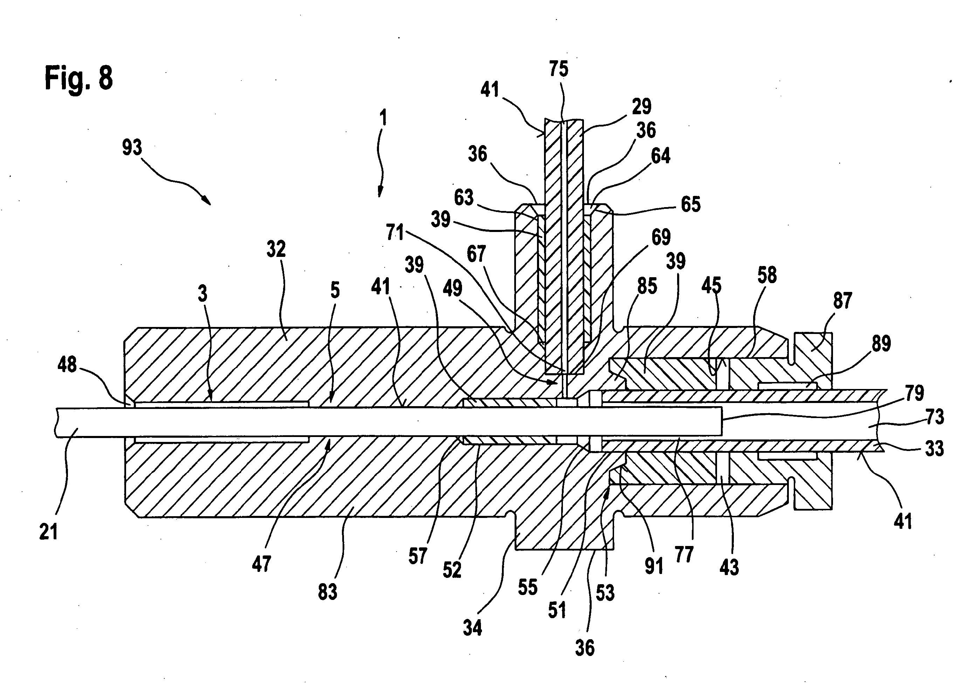

Fig. 8 shows a partly longitudinal view of a coupling element 83 with an undercut 85 surrounded with the plastic material 39. The undercut is within the aperture 43 and part of the inner surface 45. The first step 53 of the through bore 52 comprises the undercut 85. Besides this, the coupling element 83 comprises an additional cover element for encapsulating the plastic material 39 within the aperture 43 of the cover element 87. In this embodiment, the thickness of the plastic material 39 surrounding the analysis capillary 33 is dimensioned so that the plastified and/or melted plastic material 39 would flow out of the aperture 43 of the coupling element 83 during the step of plastifying and/or melting. To avoid this, the cover element 87 can be inserted additionally into the third opening 58 of the aperture 43 of the coupling element 83 for enclosing or encapsulating the plastic material 39 within the aperture 43. The cover element 87 comprises a bore 89 adapted for receiving the analysis capillary 33. The cover element 87 comprises a stepped cylindrically outer shape, wherein the cylinder with the smaller diameter can be adapted for realizing a press fit with the inner surface 45 of the aperture 43.

Additionally, the bore 89 and/or the cover element 87 can comprise a sealing material, for example silicone, rubber, Teflon®, or alike. During the step of heating the plastic material 39, the pressure within the aperture is increased, so that the plastic material 39 can penetrate the surface structure of the inner surface 45 of the aperture 43 and an outer surface 41 of the analyses capillary 33. During the step of solidifying, the plastic material 39 shrinks on the outer surface of the analysis capillary 33. Besides this, the plastic material shrinks also on an outer surface 91 of the undercut 85 of the inner surface 45 of the aperture 43. The outer surface 91 is part of the inner surface 45 of the aperture 43.

Advantageously, the plastic material 39 realizes a sealing contact with the outer surface 91 of the undercut 85 and the outer surface of the analysis capillary 33. Because of the shrinking forces applied to the surface 91 of the undercut 85 and the outer surface of the analysis capillary 33, it can be avoided, that strong solvents, possibly destroying the chemical compound, between the plastic material and the outer surface 91 of the undercut 85 and the outer surface of the analysis capillary 33.

The plastic material 39 can comprise a chemically inert polymer material, for example polyetheretherketon (PEEK), fluoropolymers for example perfluoroamines (PFA) or fluorinated ethylen-propylen copolymer (FEP), duroplastic material for example Polyimide, compounds for example metal or ceramic filled PEEK..

The flow cell 1 can be part of a fluid separation system 93 comprising a fluid delivery system, a separation device adapted for separating components delivered by the fluid delivery system. The flow cell 1 can be used for detecting the separated components within the fluid. The fluid separation system 93 can comprise, for example, a chromatographic system (LC), a high performance liquid chromatographic (HPLC) system, an HPLC arrangement comprising a chip and an mass spectrograph (MS), a high throughput LC/MS system, a purification system, micro fraction collection/spotting system, a system adapted for identifying proteins, a system comprising a GPC/SEC column, a nanoflow LC system, and/or a multidimensional LC system adapted for separation of protein digests.

The flow cell 1 can be adapted for analyzing liquid. More specifically, the flow cell 1 can be adapted for executing at least one microfluidic process, for example a liquid chromatographic process, for example a high performance liquid chromatographic process (HPLC). Therefore, the flow cell 1 can be coupled to a liquid delivery system, in particular to a pump, and/or to a power source. For analyzing liquid or rather one or more components within the liquid, the flow cell 1 can comprise a detection area, such as an optical detection area and/or an electrical detection area being arranged close to a flow path within the flow cell 1. Besides this, the flow cell 1 can be a component part of a laboratory arrangement.

## Claims

1. A method of coupling two conduits (3,7) for bringing them in communication, wherein each of the conduits (3,7) is adapted for conducting a medium and comprises an outlet (71,79) and an outer surface (41) adjacent to the outlet (71,79), at least one of the conduits (3,7) comprises a fiber light guide (5) adapted for conducting light, and at least one of the conduits (3,7) is adapted for conducting a fluid,
the method comprising:
- at least partly inserting the outer surfaces (41) into an aperture (43) of a coupling element (25,27;83),
- inserting a solid plastic material (39) into the aperture (43) of the coupling element (25,27;83),
- heating the plastic material (39) at least partly for at least one of plastifying and melting, and
- solidifying the plastic material (39) for sealing and fixing the conduits (3,7) within the aperture (43) of the coupling element (25,27;83).

2. The method of claim 1, comprising:
- inserting and disposing the plastic material (39) on and along an inner surface (45) of the aperture (43) and the outer surfaces (41) of the two conduits (3,7), wherein the inner surface (45) is facing the outer surfaces (41).

3. The method of claim 1 or 2, comprising at least one of:
- plastifying the plastic material (39) by heating at least partly the arrangement of the two conduits (3,7) and the coupling element (25,27;83);
- melting the plastic material (39) by heating at least partly the arrangement of the two conduits (3,7) and the coupling element (25,27;83);
- inserting one of the outer surfaces (41) into a first opening (48) of the aperture (43) and one of the outer surfaces (41) into a second opening (64) of the aperture (43)

4. The method of claim 1 or any one of the above claims, comprising at least one of:
- heating the plastic material (39) by inducing a current into the coupling element (25,27;83), wherein the coupling element (25,27;83) comprises at least partly a conductive material;
- heating the plastic material (39) by running a hot fluid through the conduits (7);
- connecting the outlets via the aperture (43) for bringing them in communication,
- inserting one of the outer surfaces (41) with integral coating into a first opening (48) of the aperture (43) and one of the outer surfaces (41) with integral coating into a second opening (64) of the aperture (43).

5. The method of claim 1 or any one of the above claims, wherein the light guide (5) comprises an optical outlet (79) and the fluid conduit (7) comprises an inner tube (73), comprising:
- inserting the optical outlet (79) of the light guide (5) into the inner tube (73) of a capillary (33).

6. A coupling for bringing two conduits (3,7) in communication, comprising:
a coupling element (25,27;83) with an aperture (43), and
a plastic material or compound (39) adapted for sealing and fixing the two conduits (3,7) within the aperture (43),
wherein each conduit (3,7) comprises an outer surface (41) and is adapted for conducting a medium,
the aperture (43) is adapted for receiving the plastic material (39) and at least partly the outer surfaces (41) of the conduits (3,7),
the plastic material (39) was heated for at least one of: at least partly plastifying, at least partly melting; and thereafter solidified, **characterized in that**
at least one of the conduits (3,7) comprises a fiber light guide (5) adapted for conducting light, and at least one of the conduits (3,7) is a fluid conduit (7) adapted for conducting a fluid.

7. The coupling of the preceding claim, wherein the aperture (43) comprises at least one inner surface (45).

8. The coupling of the preceding claim, comprising at least one of:
the at least one inner surface (45) comprises an undercut surrounded by the plastic material (39);
each outer surface faces one of the at least one inner surfaces (45) of the aperture (43);
the heated and solidified plastic material (39) is disposed on and along the outer surfaces (41) of the two conduits (3,7) and on of the at least one inner surfaces (45) of the coupling element (25,27;83).

9. The coupling of claims 6 to 8, comprising at least one of:
the aperture (43) is at least one of the following: an inner through bore (52), a stepped supplying bore (63), an opening, a breakthrough of the coupling element (25,27;83),
the aperture (43) comprises a plurality of at least three branches (47,49,51) placed in communication, wherein each branch (47,49,51) is coupled with one conduit and the plastic material (39).

10. The coupling of claims 6 to 9, comprising at least one of:
the fluid is at least one of: a liquid, a solvent, a sample;
the outlet of the fluid conduit is a fluid outlet, and the outlet of the light guide is an optical outlet and the optical outlet (71) of the light guide (5) is inserted into the fluid outlet of the fluid conduit (7), wherein the fluid conduit preferably comprises a capillary (29,31,33).

11. The coupling of claims 6 to 10, wherein the plastic material (39) comprises polyetheretherketone (PEEK), fluoropolymers, in particular perfluoroamines (PFA) or fluorinated ethylen-propylen copolymer (FEP), duroplastic material, in particular polyimide, compounds, in particular, metal or ceramic filled PEEK.

12. A flow cell (1) for housing a fluid sample and for exposing the fluid sample to radiation for analysis, comprising at least one coupling of claim 6 or any one of the above claims, and at least one of the following:
- a capillary (29,31,33) adapted for conducting the fluid sample,
- a light path comprising the capillary (33), a first and a second fiber light guide adapted for conducting the light into and out of the flow cell (21,23),
- a supplying conduit adapted for conducting the fluid sample into and out of the capillary (29,31).

13. The flow cell of the preceding claim, comprising at least one of:
the flow cell comprises two of the couplings;
the couplings comprise each a plurality of communicating branches;
the couplings comprise each a first branch (47) each coupled to one of the light guides (5), a third branch (51) each coupled to one end of the analysis capillary (33), and each a second branch (49) each coupled to a supporting capillary (29,31);
the flow cell comprises a housing (15) for supporting and surrounding the capillary (29,31,33) and the couplings.

14. A fluid separation system (93) comprising
- a fluid delivery system,
- a separation device for separating components of the fluid delivered by the fluid delivery system, and
- a flow cell of claim 12 or 13 for detecting the separated components within the fluid.

15. The fluid separation system of the preceding claim, wherein the fluid separation system is or comprises at least one of:
- a chromatographic system (LC),
- a high performance liquid chromatographic (HPLC) system,
- an HPLC arrangement comprising a chip and an mass spectrograph (MS),
- a high throughput LC/MS system,
- a purification system,
- micro fraction collection/spotting system,
- a system adapted for identifying proteins,
- a system comprising a GPC/SEC column,
- a nanoflow LC system,
- a multidimensional LC system adapted for separation of protein digests.

## Patentansprüche

1. Verfahren zum Verbinden von zwei Leitungen (3, 7), um zwischen ihnen einen Übergang zu ermöglichen, wobei jede der Leitungen (3, 7) zum Leiten eines Mediums geeignet ist und einen Auslauf (71, 79) und eine dem Auslauf (71, 79) benachbarte Außenfläche (41) aufweist, wobei mindestens eine der Leitungen (3, 7) einen Lichtwellenleiter (5) zum Leiten von Licht aufweist und mindestens eine der Leitungen (3, 7) zum Leiten eines Fluids geeignet ist,
wobei das Verfahren die folgenden Schritte aufweist:
- Einfügen der Außenflächen (41) zumindest teilweise in eine Öffnung (43) eines Verbindungselements (25, 27; 83),
- Einfügen eines festen Kunststoffmaterials (39) in die Öffnung (43) des Verbindungselements (25, 27; 83),
- Erwärmen des Kunststoffmaterials (39) zumindest teilweise, um dieses zumindest teilweise zu erweichen und/oder zu schmelzen, und
- Erstarren des Kunststoffmaterials (39) zum Abdichten und Befestigen der Leitungen (3, 7)
innerhalb der Öffnung (43) des Verbindungselements (25, 27; 83).

2. Verfahren nach Anspruch 1, das folgenden Schritt aufweist:
- Einfügen und Anordnen des Kunststoffmaterials (39) auf und entlang einer Innenfläche (45) der Öffnung (43) sowie auf und entlang der Außenflächen (41) der beiden Leitungen (3, 7),
wobei die Innenfläche (45) den Außenflächen (41) gegenüberliegt.

3. Verfahren Anspruch 1 oder 2, das mindestens einen der folgenden Schritte aufweist:
- Erweichen des Kunststoffmaterials (39) durch zumindest teilweises Erwärmen der Anordnung der beiden Leitungen (3, 7) und des Verbindungselements (25, 27; 83); und/oder
- Schmelzen des Kunststoffmaterials (39) durch zumindest teilweises Erwärmen der Anordnung der beiden Leitungen (3, 7) und des Verbindungselements (25, 27; 83); und/oder
- Einfügen einer der Außenflächen (41) in eine erste Öffnung (48) der Öffnung (43) und einer der Außenflächen (41) in eine zweite Öffnung (64) der Öffnung (43).

4. Verfahren nach Anspruch 1 oder einem der vorhergehenden Ansprüche, das mindestens einen der folgenden Schritte aufweist:
- Erwärmen des Kunststoffmaterials (39) durch Einleiten eines Stroms in das Verbindungselement (25, 27; 83), wobei das Verbindungselement (25, 27; 83) zumindest teilweise einen leitenden Werkstoff aufweist;
- Erwärmen des Kunststoffmaterials (39) durch Leiten eines heißen Fluids durch die Leitungen (7);
- Verbinden der Ausläufe miteinander über die Öffnung (43), um einen Übergang zwischen ihnen zu ermöglichen,
- Einfügen einer der mit einer integrierten Beschichtung versehenen Außenflächen (41) in eine erste Öffnung (48) der Öffnung (43) und einer der mit einer integrierten Beschichtung versehenen Außenflächen (41) in eine zweite Öffnung (64) der Öffnung (43).

5. Verfahren nach Anspruch 1 oder einem der vorhergehenden Ansprüche, wobei der Lichtwellenleiter (5) eilnen optischen Ausgang (79), die Fluidleitung (7) ein Innenrohr (73) und das Verfahren den folgenden Schritt aufweist:
- Einfügen des optischen Ausgangs (79) des Lichtwellenleiters (5) in das Innenrohr (73) einer Kapillare (33).

6. Verbindungeinheit zum Verbinden von zwei Leitungen (3, 7), die aufweist:
ein Verbindungselement (25, 27; 83) mit einer Öffnung (43) und
ein Kunststoffmaterial oder eine Kunststoffverbindung (39) zum Abdichten und Befestigen der beiden Leitungen (3, 7) innerhalb der Öffnung (43),
wobei jede Leitung (3, 7) eine Außenfläche (41) aufweist und zum Leiten eines Mediums geeignet ist,
die Öffnung (43) zum Aufnehmen des Kunststoffmaterials (39) und zumindest teilweise der Außenflächen (41) der Leitungen (3, 7) geeignet ist,
das Kunststoffmaterial (39) zu einem der folgenden Zwecke erwärmt wurde: zumindest teilweises Erweichen, zumindest teilweises Schmelzen und/oder anschließendes Erstarren, **dadurch gekennzeichnet, dass**
mindestens eine der Leitungen (3, 7) einen Lichtwellenleiter (5) zum Leiten von Licht aufweist und mindestens eine der Leitungen (3, 7) als Fluidleitung (7) zum Leiten eines Fluids geeignet ist.

7. Verbindungeinheit nach dem vorhergehenden Anspruch, wobei die Öffnung (43) mindestens eine Innenfläche (45) aufweist.

8. Verbindungseinheit nach dem vorhergehenden Anspruch, die mindestens eines der folgenden Merkmale aufweist:
die mindestens eine Innenfläche (45) weist einen Unterschnitt auf, der von Kunststoffmaterial (39) umhüllt ist;
jede Außenfläche liegt mindestens einer der Innenflächen (45) der Öffnung (43) gegenüber;
das erwärmte und erstarrte Kunststoffmaterial (39) ist auf und entlang der Außenflächen (41) der beiden Leitungen (3, 7) und auf und entlang der mindestens einen Innenfläche (45) des Verbindungselements (25, 27; 83) angebracht.

9. Verbindungseinheit nach den Ansprüchen 6 bis 8, die mindestens folgende Merkmale aufweist:
als Öffnung (43) dient mindestens eines der folgenden Merkmale: eine innere Durchgangsbohrung (52), eine gestufte Eingangsbohrung (63), eine Öffnung, und/oder ein Durchstich des Verbindungselements (25, 27; 83),
die Öffnung (43) weist eine Vielzahl von mindestens drei untereinander in Verbindung stehenden Abzweigen (47, 49, 51) auf, wobei jeder Abzweig (47, 49, 51) mit einer Leitung und dem Kunststoffmaterial (39) verbunden ist.

10. Verbindungseinheit nach den Ansprüchen 6 bis 9, die mindestens eines der folgenden Merkmale aufweist:
als Fluid kommt mindestens eines der folgenden Medien infrage: eine Flüssigkeit, ein Lösemittel und/oder eine Probe;
bei dem Auslauf der Fluidleitung handelt es sich um einen Fluidauslauf, bei dem Ausgang des Lichtwellenleiters handelt es sich um einen optischen Ausgang, und der optische Ausgang (71) des Lichtwellenleiters (5) ist in den Fluidauslauf der Fluidleitung (7) eingeführt, wobei die Fluidleitung vorzugsweise eine Kapillare (29, 31, 33) aufweist.

11. Verbindungseinheit nach den Ansprüchen 6 bis 10, wobei das Kunststoffmaterial (39) Polyetheretherketon (PEEK), Fluorpolymere, insbesondere Perfluoramine (PFA) oder fluoriertes Ethylen-Propylen-Copolymer (FEP), duroplastische Werkstoffe, insbesondere Polyimid, Verbundwerkstoffe, insbesondere mit Metall oder Keramik gefüllten PEEK, aufweist.

12. Durchflusszelle (1) zum Aufnehmen einer Fluidprobe und zum Bestrahlen der Fluidprobe mit einer Strahlung zu Analysezwecken, die mindestens eine Verbindungseinheit nach Anspruch 6 oder einem der vorhergehenden Ansprüche und mindestens eines der folgenden Merkmale aufweist:
- eine Kapillare (29, 31, 33) zum Leiten der Fluidprobe,
- einen Lichtpfad, der die Kapillare (33), einen ersten und einen zweiten Lichtwellenleiter zum Einleiten des Lichts in die Durchflusszelle (21, 23) und zum Ausleiten des Lichts aus der Durchflusszelle aufweist,
- eine Zuleitung zum Einleiten der Fluidprobe in die Kapillare (29, 31) und zum Ausleiten aus der Kapillare.

13. Durchflusszelle nach dem vorhergehenden Anspruch, die mindestens eines der folgenden Merkmale aufweist:
die Durchflusszelle weist zwei der Verbindungselemente auf;
die Verbindungseinheiten weisen jeweils eine Vielzahl miteinander in Verbindung stehender Abzweige auf;
die Verbindungen weisen je einen ersten Abzweig (47) auf, der jeweils mit einem der Lichtwellenleiter (5) verbunden ist, einen dritten Abzweig (51), der jeweils mit einem Ende der Analysekapillare (33) verbunden ist, und je einen zweiten Abzweig (49), der jeweils mit einer Trägerkapillare (29, 31) verbunden ist;
die Durchflusszelle weist ein Gehäuse (15) zum Haltern und Umhüllen der Kapillare (29, 31, 33) und der Verbindungselemente auf.

14. Fluidtrennsystem (93), das aufweist:
- ein Fluidzuleitungssystem,
- eine Trenneinrichtung zum Trennen der Komponenten des durch das Fluidzufuhrsystem zugeleiteten Fluids, und
- eine Durchflusszelle nach Anspruch 12 oder 13 zum Detektieren der getrennten Komponenten innerhalb des Fluids.

15. Fluidtrennsystem nach dem vorhergehenden Anspruch, wobei es sich bei dem Fluidtrennsystem um Folgendes handelt oder das Fluidtrennsystem zumindest eines der folgenden Merkmale aufweist:
- ein chromatografisches System (LC),
- ein Hochleistungs-Flüssigkeitschromatografiesystem (HPLC),
- eine HPLC-Anordnung, die einen Chip und ein Massenspektrometer (MS) aufweist,
- ein hochleistungsfähiges LC/MS-System,
- ein Reinigungssystem,
- ein System zum Sammeln/Erkennen von Mikromengen,
- ein System zum Analysieren von Proteinen,
- ein System, das eine GPC/SEC-Säule aufweist,
- ein Nanoliter-LC-System,
- ein mehrdimensionales LC-System zum Trennen von Proteinabbauprodukten.

## Revendications

1. Procédé d'accouplement de deux conduites (3,7) pour les amener en communication, dans lequel chacune des conduites (3,7) est à même d'acheminer un milieu et comprend une sortie (71, 79) et une surface externe (41) adjacente à la sortie (71, 79), au moins,une des conduites (3, 7) comprend un guide optique à fibres (5) à même d'acheminer la lumière, et au moins une des conduites (3, 7) est à même de conduire un fluide,
le procédé comprenant :
- l'insertion au moins partielle des surfaces externes (41) dans une ouverture (43) d'un élément d'accouplement (25, 27 ; 83),
- l'insertion d'un matériau plastique solide (39) dans l'ouverture (43) de l'élément d'accouplement (25, 27 ; 83),
- le chauffage du matériau plastique (39) au moins partiellement pendant une étape de plastification et/ou de fusion, et
- la solidification du matériau plastique (39) pour fermer hermétiquement et fixer les conduites (3,7)
à l'intérieur de l'ouverture (43) de l'élément d'accouplement (25, 27 ; 83).

2. Procédé suivant la revendication 1, comprenant :
- l'insertion et la disposition du matériau plastique (39) sur et le long d'une surface interne (45) de l'ouverture (43) et des surfaces externes (41) des deux conduites (3, 7),
dans lequel la surface interne (45) est tournée vers les surfaces externes (41).

3. Procédé suivant la revendication 1 ou 2, comprenant au moins une des étapes suivantes :
- la plastification du matériau plastique (39) en chauffant au moins partiellement le montage des deux conduites (3, 7) et l'élément d'accouplement (25, 27 ; 83) ;
- la fusion du matériau plastique (39) en chauffant au moins partiellement le montage des deux conduites (3, 7) et l'élément d'accouplement (25, 27 ; 83) ;
- l'insertion d'une des surfaces externes (41) dans un premier orifice (48) de l'ouverture (43) et une des surfaces externes (41) dans un deuxième orifice (64) de l'ouverture (43).

4. Procédé suivant la revendication 1 ou l'une quelconque des revendications précédentes, comprenant au moins une des étapes suivantes :
- le chauffage du matériau plastique (39) en induisant un courant dans l'élément d'accouplement (25, 27 ; 83), dans lequel l'élément d'accouplement (25, 27 ; 83) comprend un matériau au moins partiellement conducteur ;
- le chauffage du matériau plastique (39) en faisant passer un fluide chaud à travers les conduites (7) ;
- le raccordement des sorties par l'intermédiaire de l'ouverture (43) pour les amener en communication ;
- l'insertion d'une des surfaces externes (41) comportant un revêtement intégral dans un premier orifice (48) de l'ouverture (43) et une des surfaces externes (41) comportant un revêtement intégral dans un deuxième orifice (64) de l'ouverture (43).

5. Procédé suivant la revendication 1 ou l'une quelconque des revendications précédentes, dans lequel le guide optique (5) comprend une sortie optique (79) et la conduite de fluide (7) comprend un tube interne (73), comprenant :
- l'insertion de la sortie optique (79) du guide optique (5) dans le tube interne (73) d'un capillaire (33).

6. Accouplement pour amener deux conduites (3,7) en communication, comprenant :
un élément d'accouplement (25, 27 ; 83) comportant une ouverture (43), et
un composé ou un matériau plastique (39) à même de fermer hermétiquement et de fixer les deux conduites (3,7) à l'intérieur de l'ouverture (43),
dans lequel chaque conduite (3, 7) comprend une surface externe (41) et est à même d'acheminer un milieu,
l'ouverture (43) est à même de recevoir le matériau plastique (39) et au moins en partie les surfaces externes (41) des conduites (3, 7),
le matériau plastique (39) a été chauffé pendant au moins une des étapes suivantes : la plastification au moins partielle et la fusion au moins partielle, puis solidifié, **caractérisé en ce que**
au moins une des conduites (3, 7) comprend un guide optique à fibres (5) à même d'acheminer la lumière, et au moins une des conduites (3, 7) est une conduite de fluide (7) à même d'acheminer un fluide.

7. Accouplement suivant la revendication précédente, dans lequel l'ouverture (43) comprend au moins une surface interne (45).

8. Accouplement suivant la revendication précédente, comprenant au moins un des aspects suivants :
la au moins une surface interne (45) comprend un creux entouré par le matériau plastique (39) ;
chaque surface externe est tournée vers une des au moins une surfaces internes (45) de l'ouverture (43) ;
le matériau plastique chauffé et solidifié (39) est disposé sur et le long des surfaces externes (41) des deux conduites (3, 7) et une des au moins une surfaces internes (45) de l'élément d'accouplement (25, 27 ; 83).

9. Accouplement suivant les revendications 6 à 8, comprenant au moins un des aspects suivants :
l'ouverture (43) est au moins une des suivantes : un trou passant interne (52), un alésage d'alimentation étagé (63), un orifice, une perforation de l'élément d'accouplement (25, 27 ; 83),
l'ouverture (43) comprend une pluralité d'au moins trois branchements (47, 49, 51) placés en communication, dans laquelle chaque branchement (47, 49, 51) est accouplé à une conduite et au matériau plastique (39).

10. Accouplement suivant les revendications 6 à 9, comprenant au moins un des aspects suivants :
le fluide est : un liquide, un solvant et/ou un échantillon ;
la sortie de la conduite de fluide est une sortie de fluide, et la sortie du guide optique est une sortie optique et la sortie optique (71) du guide optique (5) est insérée dans la sortie de fluide de la conduite de fluide (7), dans lequel la conduite de fluide comprend de préférence un capillaire (29, 31, 33).

11. Accouplement suivant les revendications 6 à 10, dans lequel le matériau plastique (39) comprend du polyétheréthercétone (PEEK), des fluoropolymères, en particulier des perfluoroamines (PFA) ou un copolymère éthylène-propylène fluoré (FEP), un matériau plastique thermodurcissable, en particulier un polyimide, des composés, en particulier du PEEK rempli de métal ou de céramique.

12. Cellule à flux (1) pour contenir un échantillon de fluide et pour exposer l'échantillon de fluide à un rayonnement en vue de son analyse, comprenant au moins un accouplement suivant la revendication 6 ou l'une quelconque des revendications précédentes, et au moins un des éléments suivants :
- un capillaire (29, 31, 33) à même d'acheminer l'échantillon de fluide,
- un trajet optique comprenant le capillaire (29, 31, 33), un premier et un deuxième guides optiques à fibres à même d'acheminer la lumière dans et hors de la cellule à flux (21, 23),
- une conduite d'alimentation à même d'acheminer l'échantillon de fluide dans et hors du capillaire (29, 31, 33).

13. Cellule à flux suivant la revendication précédente, comprenant au moins un des aspects suivants :
la cellule à flux comprend deux des accouplements ;
les accouplements comprennent chacun une pluralité de branchements en communication ;
les accouplements comprennent chacun un premier branchement (47) accouplé chacun à un des guides optiques (5), un troisième branchement (51) couplé chacun à une extrémité du capillaire d'analyse (33), et chacun un deuxième branchement (49) couplé chacun à un capillaire de soutien (29, 31);
la cellule à flux comprend un logement (15) pour soutenir et entourer le capillaire (29, 31, 33) et les accouplements.

14. Système de séparation de fluide (93) comprenant
- un système d'alimentation de fluide,
- un dispositif de séparation pour séparer des composants du fluide alimenté par le système d'alimentation de fluide, et
- une cellule à flux suivant la revendication 12 ou 13 pour détecter les composants séparés à l'intérieur du fluide.

15. Système de séparation de fluide suivant la revendication précédente, dans lequel le système de séparation de fluide est ou comprend au moins un des éléments suivants :
- un système chromatographique (LC),
- un système de chromatographie liquide à haute performance (HPLC),
- un montage HPLC comprenant une puce et un spectromètre de masse (MS),
- un système LC/MS à haut débit,
- un système de purification,
- un système de collecte/application de micro-fractions,
- un système à même d'identifier des protéines,
- un système comprenant une colonne GPC/SEC,
- un système LC à nanoflux,
- un système LC multidimensionnel adapté pour la séparation de produits de la digestion de protéines.
